# EUROPÄISCHE PATENTSCHRIFT

(11) **EP 3 077 166 B1**
(45) Veröffentlichungstag und Bekanntmachung des Hinweises auf die Patenterteilung: **13.06.2018**
(21) Anmeldenummer: 14809610.0
(22) Anmeldetag: 01.12.2014
(51) Int. Cl.: B26D 1/40, B65H 35/08

(54) **WALZENSCHNEIDWERK UND VERFAHREN ZUM TRENNEN VON FASERMATERIAL IN ABSCHNITTE**
ROLLER CUTTING UNIT AND METHOD FOR SEPARATING FIBRE MATERIAL INTO SECTIONS
MÉCANISME DE DÉCOUPAGE À CYLINDRES ET PROCÉDÉ DE DÉCOUPAGE D'UNE MATIÈRE FIBREUSE EN SEGMENTS

(30) Priorität: 04.12.2013 DE 102013224835; 17.10.2014 DE 102014221085
(43) Veröffentlichungstag der Anmeldung: 12.10.2016
(73) Patentinhaber: Voith Patent GmbH, 89522 Heidenheim (DE)
(72) Erfinder: UFER, Jaromir, 80807 München (DE); ERHARDSBERGER, Andreas, 94419 Reisbach (DE); VON SOMMOGGY UND ERDÖDY, Maximilian, 81829 München (DE)
(86) Internationale Anmeldenummer: PCT/EP2014/076070
(87) Internationale Veröffentlichungsnummer: WO 2015/082387

(56) Entgegenhaltungen:
- WO-A1-93/12974
- US-A1- 2008 196 564

## Beschreibung

Die Erfindung betrifft eine Vorrichtung zum Trennen von Fasermaterial, insbesondere von strang- oder bandförmigem Fasermaterial, in Abschnitte und zum Ablegen der Abschnitte, aufweisend eine Trennwalze mit mehreren am Umfang angeordneten Messern, eine Gegenwalze und einen Abschnittträger, wobei die Trennwalze und die Gegenwalze gegenläufig rotieren können und so angeordnet sind, dass das Fasermaterial zwischen Trennwalze und Gegenwalze hindurchgeführt und dabei von einem der Messer im Zusammenwirken mit der Gegenwalze durchtrennt werden kann, so dass dadurch ein Abschnitt entsteht. Das Trennen erfolgt durch Schneiden oder durch Brechen der Fasern über einer Kante. Für das Zusammenwirken zwischen Messer und Gegenwalze müssen sich diese nicht unbedingt berühren.

Als Fasermaterial kommen beispielsweise Rovings, Faserstränge oder Bänder, insbesondere Gewebebänder, Gelegebänder oder Vliesbänder in Frage. Die Fasern für das Fasermaterial können Kohlefasern, Glasfasern, Aramidfasern oder andere Fasern sein. Ein Faserstrang kann aus verdrehten oder versponnenen Fasern bestehen. Ein Faserstrang aus zahlreichen Fasern, die unverdreht gleichzeitig von einer Spule oder aus einem Knäuel abgewickelt werden, nennt man Garnbündel oder Roving. Dabei können die Rovings aus bis zu mehreren Zehntausend endlosen, parallel angeordneten Einzelfasern, die auch Filamente genannt werden, bestehen. Solche Rovings oder Bänder werden besonders für die Herstellung faserverstärkter Kunststoffbauteile verwendet. Oft besteht die Notwendigkeit, das Fasermaterial, das mehr oder weniger endlos vorliegt, auf eine bestimmte Länge zu schneiden. In der Veröffentlichung WO 02/055770 A1 ist eine entsprechende Vorrichtung dafür beschrieben. Sie weist eine Trennwalze mit axial am Umfang angeordneten Messern und eine Gegenwalze auf. Das Fasermaterial wird in kurze Stücke geschnitten und fällt nach dem Schneiden nach unten aus der Vorrichtung heraus. Augenmerk wird darauf gelegt, den Schneidvorgang so auszuführen, dass die Faserstücke möglichst exakt und konstant auf die korrekte Länge geschnitten werden. Nachteilig ist, dass die Faserstücke einfach nur durch die Schwerkraft nach unten fallen und so nicht gezielt abgelegt werden können. Gewisse Dichte- und Ausrichtungsunterschiede lassen sich beim Ablegen nicht vermeiden.

Eine weitere Vorrichtung ist in der Veröffentlichung US 2008/0196564 A1 beschrieben.

Die Aufgabe der Erfindung ist es nun eine derartige Vorrichtung bzw. ein derartiges Verfahren so weiterzuentwickeln, dass mit hoher Produktivität Abschnitte vom Fasermaterial getrennt und besser kontrolliert abgelegt werden können.
Die Aufgabe wird erfindungsgemäß durch eine Vorrichtung entsprechend Anspruch 1 gelöst. Die Vorrichtung weist dazu an der Gegenwalze oder an der Trennwalze mehrere integrierte Halteelemente auf, so ausgebildet, dass jeweils zumindest eines der Halteelemente eine Haltekraft auf einen jeweiligen Abschnitt ausübt, wodurch der Abschnitt an der Walze mit den Halteelementen gehalten und nach dem Durchtrennen ein Stück mit dem Walzenumfang dieser Walze mitbewegt werden kann, und so ausgebildet, dass der jeweilige Abschnitt nach dieser Mitbewegung auf den Abschnittträger abgelegt werden kann. Integriert meint in diesem Zusammenhang, dass die Halteelemente mit der entsprechenden Walze mitrotieren. Die Halteelemente unterscheiden sich dabei von den bisher bekannten Klemmelementen, die das Fasermaterial nur an die Gegenwalze drücken, um es besser und genauer schneiden zu können, aber nicht das Fasermaterial durch eine Haltekraft an der Walze halten.
Dadurch dass ein Halteelement vorhanden ist, das den Abschnitt nach dem Trennen an der Walze hält, wird der Abschnitt durch die Rotation der Walze kontrolliert weiterbewegt. Besonders vorteilhaft ist, dass dadurch der Abschnitt soweit aus dem Bereich der anderen Walze wegbewegt werden kann, dass er von der Walze abgelöst und kontrolliert auf dem Abschnittträger abgelegt werden kann. Das kontrollierte Ablegen wird zudem dadurch verbessert, dass die Halteelemente im Wesentlichen radial verschiebbar ausgeführt sind, und zwar derart dass sie zum Ablegen den Abschnitt vom Walzenumfang weg bewegen können. Wird die im Wesentlichen radiale Verschiebung nach außen mit einem ausreichenden Impuls ausgeführt und abrupt gestoppt, so kann dadurch der Abschnitt entgegen der Haltekraft vom Halteelement abgelöst und abgelegt werden.

Dadurch kann die bei faserverstärkten Kunststoffbauteilen besonders entscheidende Ausrichtung der Abschnitte beim Ablegen genau festgelegt werden. Gegenüber mehrachsigen Ablegerobotern hat die Vorrichtung den Vorteil, dass eine wesentlich höhere Produktivität (Ablegerate) möglich ist. Ein weiterer Vorteil ist, dass mit der erfindungsgemäßen Vorrichtung die Abschnitte auch quer zu ihrer Längsrichtung nebeneinander abgelegt werden können. Aufgrund der in einer Vorrichtung kombinierten Anordnung zum Trennen und kontrollierten Ablegen kann eine besonders hohe Produktivität bei gleichzeitig hoher Qualität bezüglich der Ausrichtung erzielt werden.

Besonders geeignet ist eine erfindungsgemäße Vorrichtung zur Herstellung von Preforms oder Halbzeugen für faserverstärkte Kunststoffbauteile. Insbesondere bandförmige Halbzeuge u.a. mit quer zur Bandrichtung ausgerichteten Fasern oder flächige Halbzeuge z.B. auch mit nicht-rechteckigen Umrissen lassen sich so besonders gut und schnell herstellen.

Mehrere Messer oder mehrere Halteelemente können beispielsweise auch zwei Messer oder zwei Halteelemente sein. Bevorzugt weist die Trennwalze mindestens vier Messer am Walzenumfang auf und bevorzugt sind mindestens vier integrierte Halteelemente an der Gegenwalze oder an der Trennwalze vorhanden.

Der Abschnittträger kann ein Förderband sein oder auch direkt ein Formwerkzeug oder ein Bauteil, auf das die Abschnitte abgelegt werden. Das Formwerkzeug oder das Bauteil können beispielsweise auf einem verfahrbaren x-y-Tisch angeordnet sein, so dass die Abschnitte an der gewünschten Position abgelegt werden. Der x-y-Tisch kann auch höhenverstellbar sein. Ebenso können die Abschnitte direkt auf einem solchen Tisch abgelegt werden. Das Formwerkzeug oder das Bauteil, auf das abgelegt wird, kann auch eine 3-dimensionale Oberfläche aufweisen.

Wird ein Roving als Fasermaterial eingesetzt, so wird dieser bevorzugt vor dem Trennen aufgespreizt, so dass die Fasern nebeneinander liegen und in dieser Lage vom Halteelement gehalten und anschließend abgelegt werden.

Das Fasermaterial besteht bevorzugt überwiegend oder weitgehend vollständig aus Fasern. Es kann aber durchaus auch Bindermaterial oder Matrixmaterial enthalten. Und das Fasermaterial kann auch größere Mengen Binder- oder Matrixmaterial enthalten, zum Beispiel wenn sogenanntes Prepreg, insbesondere Thermoplast-Prepreg, verarbeitet wird. Prepreg ist ein Fasermaterial, das bereits mit Matrixmaterial imprägniert ist, welches später beispielsweise nach dem Umformen ausgehärtet oder konsolidiert wird.

Mit der Vorrichtung können ebenso mehrere Rovings oder Faserstränge oder Bänder gleichzeitig nebeneinander zugeführt, getrennt und die Abschnitte abgelegt werden. Mit der erfindungsgemäßen Vorrichtung können insbesondere auch längere Abschnitte hergestellt und mit hoher Ablegerate abgelegt werden. Bevorzugte Längen für die Abschnitte sind zwischen 10 und 300 mm, besonders bevorzugt zwischen 40 und 80 mm. Entsprechend müssen die Abstände der benachbarten Messer auf dem Walzenumfang der Trennwalze sein.

Weitere vorteilhafte Merkmale der erfindungsgemäßen Ausführung, die die Produktivität oder die kontrollierte Ablage verbessern, finden sich in den Unteransprüchen und in der nachfolgenden Beschreibung.

Bevorzugt ist zwischen zwei benachbarten Messern jeweils ein Halteelement vorgesehen. Bei etwas biegesteiferen Fasern wie beispielsweise Kohlenstofffasern oder Glasfasern ist das ausreichend, um den Abschnitt halten und kontrolliert ablegen zu können. Sollen längere Abschnitte getrennt und abgelegt werden oder weniger biegesteife Fasern verarbeitet werden, können auch zwei oder mehr Halteelemente zwischen zwei benachbarten Messern vorgesehen sein. Bevorzugt sind die Messer am Umfang der Trennwalze im Wesentlichen in axialer Richtung angeordnet.

Besonders geeignet als Halteelemente sind Vakuumhalteelemente, wobei eine Vakuumversorgung vorgesehen ist, die in dem Umfangsbereich, in dem der Abschnitt abgelegt werden soll, abschaltbar ist oder unterbrochen werden kann. Die Verbindung der Vakuumhalteelemente mit der Vakuumversorgung erfolgt über zumindest einen Vakuumanschluss an den Vakuumhalteelementen. Die Vakuumhalteelemente weisen z.B. eine gelochte oder perforierte Oberfläche auf, über die der Abschnitt angesaugt wird. Dadurch wird eine Haltekraft ausgeübt. Wenn der Abschnitt abgelegt werden soll, kann die Vakuumversorgung unterbrochen oder abgeschaltet werden, so dass die Haltekraft reduziert wird oder ganz verschwindet. Der Abschnitt kann dann von der Walze kontrolliert abgelöst und abgelegt werden.

Weiterhin ist es vorteilhaft, wenn die Vakuumversorgung über einen stehenden Vakuumstutzen, welcher mit einer Unterdruckquelle verbunden ist, erfolgt, und der so ausgebildet ist, dass er im Umfangsbereich, in dem der Abschnitt gehalten werden soll, die Vakuumanschlüsse der entsprechenden Halteelemente mit der Vakuumversorgung verbindet und in dem Umfangsbereich, in dem der Abschnitt abgelegt werden soll, die Vakuumanschlüsse freigibt. Dadurch ergibt sich eine besonders einfache Umsetzung mit geringem Regelungsaufwand.

Generell ist es auch von Vorteil, wenn die Halteelemente, insbesondere die Vakuumhalteelemente, so ausgeführt sind, dass der Abschnitt in dem Bereich, in dem er abgelegt werden soll, durch einen Luftstrom aus dem Halteelemente abgeblasen werden kann. Dazu kann zum Beispiel ein weiterer Verbindungsstutzen vorgesehen sein, der die Vakuumanschlüsse mit einer Druckluftquelle verbindet und zwar in dem Bereich, in dem der Abschnitt abgelegt werden soll.

Alternativ können die Halteelemente auch als elektrostatische Halteelemente oder als mechanische Halteelemente ausgeführt sein. Die elektrostatische Aufladung kann ebenfalls einfach erzeugt und wieder abgeführt werden, so dass die Haltekraft zum Ablegen reduziert wird oder verschwindet. Die mechanische Ausführung kann beispielsweise bewegliche Klammern oder Haltebügel oder Nadeln aufweisen. Ein Abschalten der Haltekraft kann in diesem Fall durch Wegbewegen, Drehen oder Zurückziehen der Klammern, Haltebügel oder Nadeln erfolgen.

Besonders einfach und wirkungsvoll wird die radiale Bewegung der Halteelemente während der Rotation der Walzen über eine Kulissenführung gesteuert, insbesondere derart, dass die Kulissenführung einen Stufensprung im Wesentlichen radial nach außen aufweist in dem Umfangsbereich, in dem der Abschnitt abgelegt werden soll.

Außerdem können eines oder mehrere Federelemente vorgesehen sein, die die Halteelemente im Wesentlichen radial nach außen bis an eine Anschlagkante drücken. Insbesondere in Kombination mit einer Kulissenführung die die Anschlagkante bildet und die einen Stufensprung nach außen aufweist, kann so zum Beispiel ein Impuls zum Ablösen des Abschnittes erzeugt werden.

Bevorzugt beträgt der Winkel entlang des Walzenumfanges zwischen der Stelle, an der das Messer das Fasermaterial durchtrennen kann, bis zu der Stelle an der der Abschnitt abgelegt wird, zwischen 20° und 180°, und besonders bevorzugt zwischen 45° und 135°. Dadurch ist der Abschnitt ausreichend weit weg von der anderen Walze und kann ungestört und gut kontrollierte abgelegt werden. In einer bevorzugten Ausführungsform liegen die beiden Achsen der Walzen horizontal und auch der Abschnittträger ist mit seiner Ablagefläche im Wesentlichen horizontal ausgerichtet. Der oben genannte Winkel ist dann so groß ausgeführt, dass der Abschnitt nach dem Schnitt so lange mitbewegt wird, bis er im Wesentlichen waagrecht ausgerichtet ist; und erst dann wird er abgelegt. Durch das Ablegen mit im Wesentlichen waagrechter Ausrichtung ist ein besonders kontrolliertes Ablegen möglich.

Verbessert wird die Ablegegenauigkeit auch dadurch, dass die Anordnung des Abschnittträgers so gewählt wird, dass der geringste Abstand (d) zwischen Halteelement und Abschnittträger beim Ablegen zwischen 0 und 70 mm, bevorzugt zwischen 0 und 10 mm beträgt. Durch solch einen geringen Abstand über den der Abschnitt auf den Abschnittträger fällt oder übergeben wird, ist gewährleistet, dass die gewünschte Orientierung beibehalten bleibt. Ein Abstand von 0 mm meint, dass das Halteelement beim Ablegen den Abschnitt auf den Abschnittträger drückt. Wie stark oder gering die Anpresskraft ist, kann je nach Anwendung gewählt werden. Wenn der Abschnitt mit größerer Kraft auf den Abschnittträger gedrückt wird, kann so ein Spreizen der einzelnen Fasern des Abschnittes zueinander erzeugt werden. Bei einem Abstand größer als 0 mm wird jegliche Verformung des Abschnittsträgers vermieden, was insbesondere beim Ablegen auf Formwerkzeuge oder Bauteile von Vorteil sein kann.

Um den Abschnitt nach dem Ablegen in seiner Ausrichtung zu fixieren kann es von Vorteil sein, dass der Abschnittträger als Vakuumförderband ausgebildet ist. Wird das Vakuumförderband so angeordnet, dass dieses die Abschnitte nach dem Ablegen im Wesentlichen quer zu ihrer Längsrichtung transportieren kann, bevorzugt in einem Winkel zu ihrer Längsrichtung von 60° bis 90°, besonders bevorzugt in einem Winkel zu ihrer Längsrichtung von 80° bis 90°, so können Bänder mit quer zur Bandlängsrichtung ausgerichteten Abschnitten erzeugt werden. Die Längsrichtung des Abschnittes ist die Längsrichtung des Fasermaterials, entsprechend der es der Vorrichtung zugeführt wird

Der Transport der abgelegten Abschnitte kann aber auch in 0° oder einem anderen Winkel zur Längsrichtung erfolgen.

Für das Verfahren zum Trennen von Fasermaterial, insbesondere von strang- oder bandförmigem Fasermaterial, in Abschnitte und zum Ablegen der Abschnitte wird die Aufgabe erfindungsgemäß durch ein Verfahren nach Anspruch 10 gelöst. Dazu wird eine erfindungsgemäße Vorrichtung verwendet und folgende Schritte werden nacheinander ausgeführt:
a) Trennen eines Abschnittes vom Fasermaterial
b) Halten des Abschnittes an der Gegenwalze oder an der Trennwalze und Mitbewegen des Abschnittes mit dem Walzenumfang dieser Walze
c) Ablegen des Abschnittes auf einem Abschnittsträger
Das Halteelement kann vorteilhaferweise dabei auch schon kurz vor dem Trennvorgang eine Haltekraft auf den Teil des Fasermaterials ausüben, der abgetrennt wird. Die Abfolge Abtrennen, Halten und Weiterbewegen, sowie Ablegen erfolgt entsprechend der Rotation der Walzen und der Messerabstände zeitversetzt nacheinander für mehrere Abschnitte. So wird eine kontinuierliche Produktion erreicht.
Besonders gut kann das Ablegen kontrolliert werden, wenn der Abschnitt von der Stelle, an der er vom Fasermaterial getrennt wird, bis zu der Stelle, an der er abgelegt wird, über einen Winkel zwischen 20° und 180°, bevorzugt zwischen 45° und 135° mit dem Walzenumfang mitbewegt wird. Mit dem Walzenumfang mitbewegt heißt, dass der Abschnitt sich entsprechend der Rotation der Walze mitbewegt, dazu muss er nicht vollständig am Walzenumfang anliegen. Es reicht, wenn er von einem Halteelement durch die Haltekraft ausreichend fixiert ist, so dass er sich mitbewegt.
Um den Abschnitt vom Halteelement zuverlässig zu lösen, kann zwischen Schritt b) und c) ein Impuls in radialer Richtung nach außen auf den Abschnitt ausgeübt werden. Dieser Impuls kann beispielsweise über Federelemente, die die Halteelemente nach außen drücken, eingebracht werden. Der Impuls kann auch dazu genutzt werden, den Abschnitt über einen gewissen Abstand zwischen Halteelement und Abschnittträger auf diesen zu übertragen.

Eine weitere Variante, um eine Haltekraft auf den Abschnitt auszuüben, ist der Auftrag von Bindermaterial auf eines oder mehrere Halteelemente, bevor diese mit dem Abschnitt in Kontakt kommen. Dazu kann eine Binderauftragsvorrichtung verwendet werden. Als Bindermaterial kommen zum Beispiel Kleber oder Thermoplast oder Matrixmaterial in Frage. Matrixmaterial kann ein Duromer oder Thermoplast sein, wie es zur Herstellung von faserverstärkten Kunststoffbauteilen verwendet wird. Das Bindermaterial kann als Lösung oder Schmelze oder Harz oder als Pulver aufgebracht werden. Gegebenenfalls kann eine Binderaktivierung zum Beispiel durch Erwärmung erfolgen, bevor der Abschnitt mit dem Halteelement in Kontakt kommt. Die Haltekraft wird über Adhäsion erzeugt und kann beispielsweise über die Menge des Bindermaterials oder über die Art der Aktivierung gesteuert werden. Ein Impuls nach außen oder ein Abblasen kann genutzt werden, um den Abschnitt abzulösen und kontrolliert abzulegen. Das vorhandene Bindermaterial, das auf dem Abschnitt verbleibt, kann genutzt werden, um den Abschnitt nach dem Ablegen zu fixieren.

Weiterhin kann es vorteilhaft sein, eine Binderauftragseinrichtung vorzusehen, die Bindermaterial (wie oben genannt) auf die Abschnitte nach dem Ablegen auf dem Abschnittträger aufträgt. Damit können die abgelegten Abschnitte beispielsweise zu einem Band oder einem flächigen Halbzeug miteinander verbunden werden. Die Anordnung und die Ausrichtung der Abschnitte wird für die weitere Verarbeitung fixiert. Die abgelegten Abschnitte können dadurch auch mit einer bereits abgelegten Lage aus Fasermaterial oder einer anderen Unterlage verbunden werden.

Insbesondere um Bänder mit einer Faserausrichtung quer zu ihrer Bandlängsrichtung herstellen zu können, ist es von Vorteil, wenn die Abschnitte nach dem Ablegen auf dem Abschnittsträger im Wesentlichen senkrecht zu ihrer Längsrichtung weg transportiert werden, bevorzugt in einem Winkel zu ihrer Längsrichtung von 60° bis 90°, besonders bevorzugt in einem Winkel zu ihrer Längsrichtung von 80° bis 90°. Bei Rovings ist die Faserrichtung identisch mit der Längsrichtung des Abschnittes.

Anhand von Ausführungsbeispielen werden weitere vorteilhafte Merkmale der Erfindung erläutert unter Bezugnahme auf die Zeichnungen. Die genannten Merkmale können nicht nur in der dargestellten Kombination vorteilhaft umgesetzt werden, sondern können auch einzeln untereinander kombiniert werden.
- **Fig.1a**: Ausführungsform mit Halteelementen an der Trennwalze beim Trennen
- **Fig.1b**: diese Ausführungsform beim Ablegen
- **Fig.2a**: Weitere Ausführungsform mit Halteelementen an der Gegenwalze beim Trennen
- **Fig.2b**: diese weitere Ausführungsform beim Ablegen
- **Fig.3**: Detailliertere Darstellung noch einer weiteren Ausführungsform mit federbelasteten Halteelementen
- **Fig.4**: diese weitere Ausführungsform mit Darstellung der Kulissenführung für die federbelasteten Halteelementen
- **Fig.5**: Noch eine weitere Ausführungsform mit Ablegen durch Andrücken auf dem Abschnittträger
- **Fig.6**: Draufsicht für noch eine weitere Ausführungsform mit quer angeordnetem Förderband als Abschnittträger

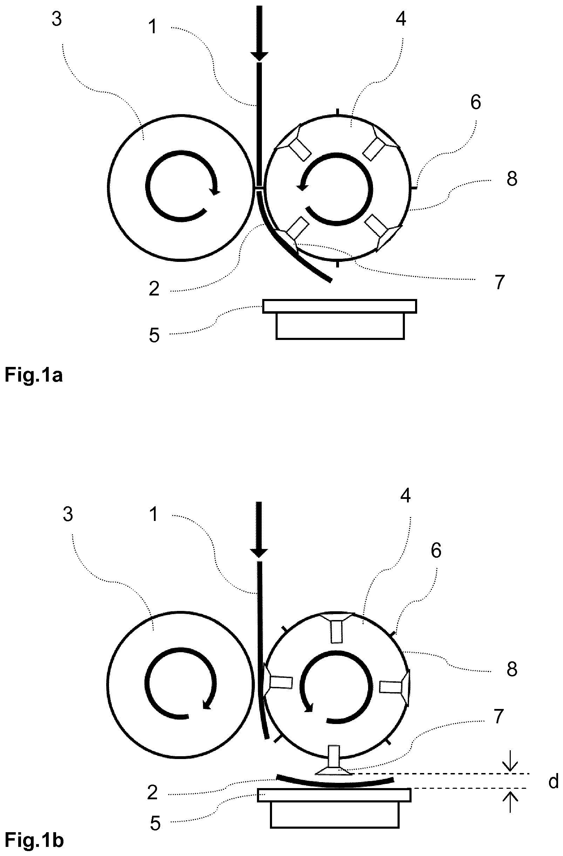

Nachfolgend werden die Figuren detaillierter beschrieben. **Fig.1** zeigt schematisch eine erfindungsgemäße Ausführungsform bei der die Halteelemente 7 in der Trennwalze 4 integriert sind. Die Ausführung zeigt eine Trennwalze 4 mit vier Messern 6 und vier Trennelementen 7. **Fig.1a** zeigt die Vorrichtung beim Trennen des Abschnittes 2 vom Fasermaterial 1. Das Fasermaterial wird aus einem nicht gezeigten Vorrat, z.B. von einer Spule oder aus einem Knäuel zugeführt. Eines der hier axial am Walzenumfang angeordneten Messer 6 auf der Trennwalze 4 schneidet den Abschnitt 2 im Zusammenwirken mit der Gegenwalze 3 und eines der Halteelemente 7, zum Beispiel als Vakuumhalteelement ausgeführt, hält den Abschnitt 2 am Walzenumfang 8 wodurch der Abschnitt 2 entsprechend der Rotation der Trennwalze 4 mitbewegt wird. Die beiden Walzen 3 und 4 rotieren mit der gleichen Umfangsgeschwindigkeit. **Fig.1b** zeigt die Vorrichtung beim Ablegen des Abschnittes 2 auf dem Abschnittträger 5, hier als Tisch oder Förderband ausgeführt. Dazu wird das entsprechende Halteelement radial nach außen verschoben. Gleichzeitig kann die Vakuumversorgung unterbrochen werden, so dass der Abschnitt 2 auf den Abschnittträger abgelegt wird. Die Ausführungsform zeigt eine bevorzugte Variante mit horizontal angeordneten Achsen der beiden Walzen 3 und 4 und horizontal angeordnetem Abschnittträger 5. Der Abstand d ist der geringste Abstand zwischen dem Halteelement und dem Abschnittträger beim Ablegen. Im gezeigten Beispiel ist er größer als 0 mm.

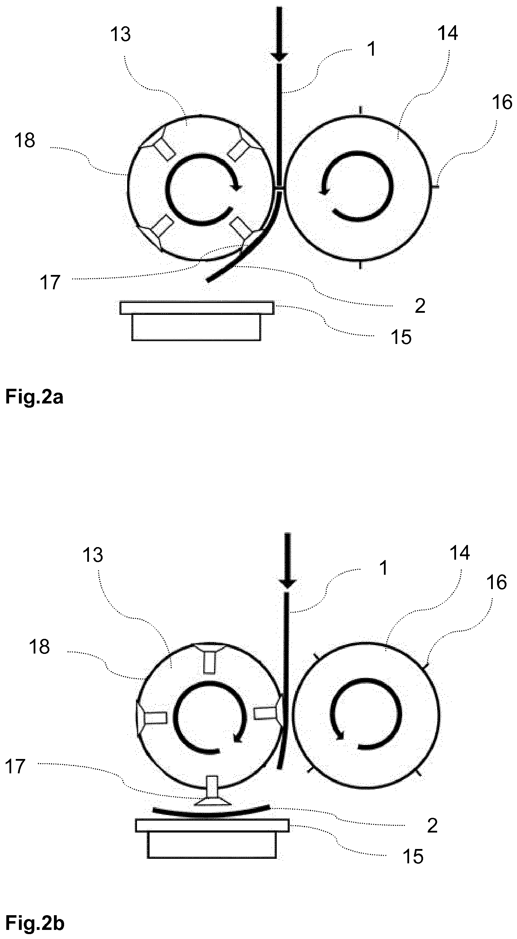

**Fig.2a** und **2b** stellen eine weitere Ausführungsform dar, bei der die Halteelemente 17 diesmal in der Gegenwalze 13 integriert sind. Die Trennwalze 14 weist am Umfang wiederum am Walzenumfang angeordnete Messer 16 auf, die die Abschnitte 2 vom Fasermaterial 1 trennen. Die Halteelemente 17 sind radial nach außen verschiebbar und können so den Abschnitt 2 auf dem Abschnittträger 15 ablegen.

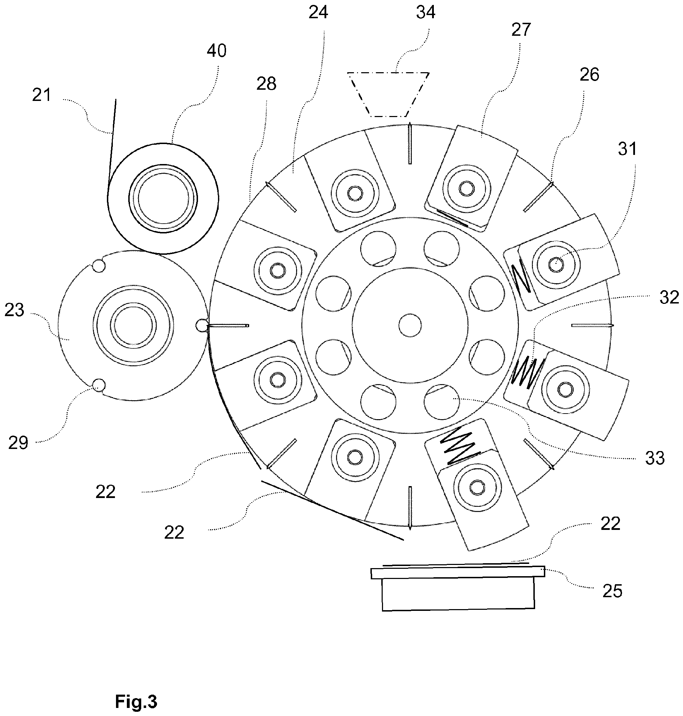

In **Fig.3** ist eine detailliertere Darstellung einer erfindungsgemäßen Ausführungsform zu sehen. Das Fasermaterial 21 wird von einer Anpresswalze 40 an die Gegenwalze 23 geführt. Die Trennwalze 24 weist am Umfang angeordnete Messer 26 und Halteelemente 27 auf. Eines der Messer 26 trennt gerade einen Abschnitt 22 vom Fasermaterial. Die Gegenwalze 23 besitzt passende Vertiefungen 29, in die das jeweilige Messer 26 eingreift. Die Vertiefung 29 kann frei sein, so dass die Fasern des Fasermaterials über der Messerkante gebrochen werden, oder sie ist mit einem elastischen Material gefüllt, z.B. einer Gummirundschnur, so dass die Fasern des Fasermaterials durch den Druck auf die Messerkante geschnitten werden. Ein weiterer Abschnitt 22 wird von einem weiteren Halteelement 27 mit dem Walzenumfang mitbewegt. Die Halteelemente 27 sind mit einem Vakuumanschluss 33 versehen und werden besaugt, um den Abschnitt 22 an der Walze zu halten. Noch ein weiterer Abschnitt 22 ist bereits auf dem Abschnittträger 25 abgelegt. Er wurde von einem Halteelement 27, das durch ein Federelement 32 nach außen gedrückt wurde, vom Walzenumfang 28 wegbewegt, mit einem Impuls versehen und auf den Abschnittträger 25 übertragen. Die Vakuumversorgung wurde dabei unterbrochen, damit sich der Abschnitt 22 vom Halteelement 27 ablöst. Zusätzlich könnte auch ein kurzer Druckluftstoß durch die Vakuumöffnungen des Halteelementes 27 aufgebracht werden, um den Abschnitt 22 abzulösen. Optional ist eine Binderauftragsvorrichtung 34 gezeigt, die Bindermaterial auf die Halteelemente dosieren kann.

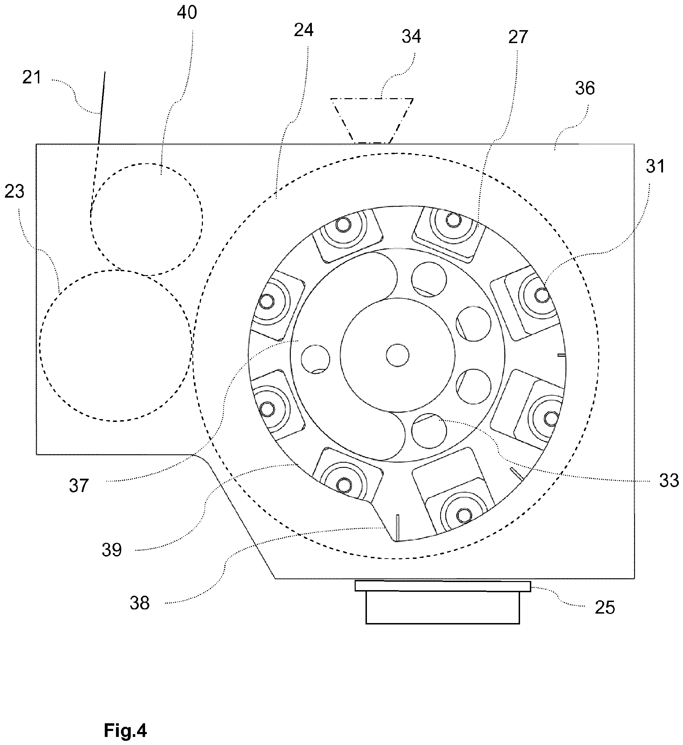

In **Fig.4** ist eine Vorrichtung wie in Fig.3 gezeigt, die mit einer Kulissenführung 36 für die Steuerung der Halteelemente ausgeführt ist. Jedes Halteelement 27 weist eine Laufrolle 31 auf, die bevorzugt drehbar im Halteelement gelagert ist. Die Federelemente 32 drücken die Halteelemente 27 soweit nach außen, bis die jeweilige Laufrolle 31 an der Anschlagkante 39 der Kulissenführung 36 ansteht. Ein Stufensprung 38 im Bereich der Ablegeposition führt dazu, dass die federbelasteten Halteelemente 27 an dieser Stelle nach außen schnellen und gegen die Anschlagkante 39 schlagen. Dadurch wird der Abschnitt 22 vom Walzenumfang 28 wegbewegt und mit einem Impuls auf den Abschnittträger 25 abgelegt. Die Vakuumversorgung erfolgt über einen stehenden Vakuumstutzen 37, der mit einer Unterdruckquelle verbunden ist. Der Vakuumstutzen 37 überdeckt die Vakuumanschlüsse 33 in dem Bereich, in dem die Abschnitte 22 gehalten werden sollen. In dem Bereich des Ablegens werden die Vakuumanschlüsse 33 freigegeben, so dass die Halteelemente 27 belüftet werden und die Haltekraft verschwindet. Der Abschnitt 22 kann sich vom Halteelement 27 ablösen und wird in der oben beschriebenen Weise abgelegt. Optional kann im Bereich des Ablegens zusätzlich ein Druckluftstutzen Luft in die Halteelemente zuführen, so dass die Abschnitte 22 vom Halteelement abgeblasen werden können. Die im weiteren Verlauf spiralförmig ausgeführte Anschlagkante 39 drückt die Halteelemente 27 über ihre Laufrolle 31 wieder in ihre Ausgangslage zurück.

Die Kulissenführung 36 kann einseitig oder bevorzugt auf Vorder- und Rückseite der Vorrichtung vorhanden sein. Durch eine beidseitige Ausführung wird ein Kippen der Halteelemente 27 sicher vermieden.

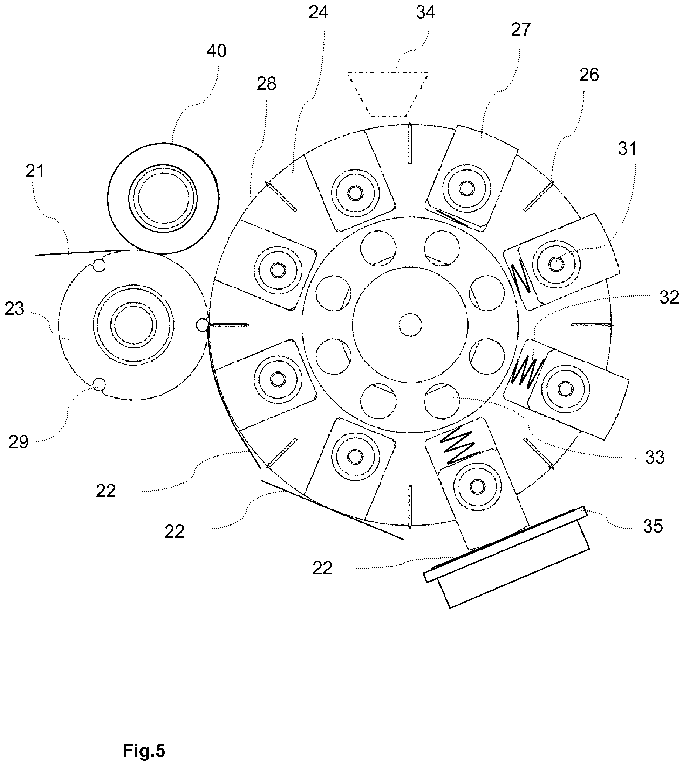

Die erfindungsgemäße Vorrichtung in **Fig.5** zeigt eine ganz ähnliche Ausführungsform zu der in Fig.3 und 4 gezeigten. Im Unterschied zu dieser wird hier der Abschnitt 22 - nach dem Abtrennen vom Fasermaterial 21 und dem Halten und Mitbewegen mit der Rotation der Trennwalze 24 - auf den Abschnittträger 35 aufgedrückt. Der beim Ablegen minimale Abstand zwischen Halteelement 27 und Abschnittträger 35 ist Null. Das bietet den Vorteil, dass eine gewisse Anpresskraft beim Ablegen ausgeübt werden kann. Außerdem wird hier als Alternative gezeigt, wie das Fasermaterial 21 über die Gegenwalze 23 anstatt über die Anpresswalze 40 zugeführt wird.

In einer weiteren vorteilhaften Ausführung kann eine erfindungsgemäße Vorrichtung so ausgebildet sein, dass die Länge der Abschnitte während des Betriebes verändert werden kann. Das kann dadurch erfolgen, dass der Roving 21 durch eine taktweise Verlangsamung gegenüber der Gegenwalze 23 und der Trennwalze 24 nach dem Schnitt eines Abschnittes 22 zurückgezogen wird. D.h. der Abschnitt wird dadurch etwas kürzer als der Abstand zwischen den Messern 26. Um das Zurückziehen zu erzeugen kann beispielsweise die Anpresswalze 40 taktweise langsamer laufen bzw. gebremst werden, so dass der Roving 21 gegenüber der Gegenwalze 23 Schlupf bekommt. Die Veränderung der Abschnittlänge ist aber auch bei den anderen erfindungsgemäßen Ausführungen ohne Anpresswalze möglich, indem auf anderem Weg die Bahnspannung des Rovings so erhöht wird, dass dieser gegenüber der Gegenwalze und der Trennwalze zurückgehalten wird.

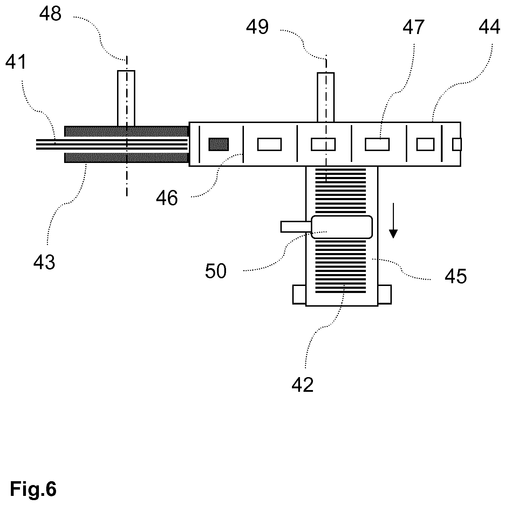

**Fig.6** zeigt eine Draufsicht von oben auf eine weitere erfindungsgemäße Ausführung. In diesem Beispiel werden mehrere Rovings oder Faserstränge oder Bänder nebeneinander als Fasermaterial 41 zugeführt und zwischen Gegenwalze 43 und Trennwalze 44 hindurchgeführt. Auf der Trennwalze 44 sind am Umfang axial angeordnete Messer 46 vorhanden die Abschnitte 42 vom Fasermaterial 41 trennen. Die Halteelemente 47 sind ebenfalls am Umfang zu sehen. Die Rotationsachsen der beiden Walzen sind mit 48 und 49 angedeutet. Als Abschnittträger 45 ist ein Förderband, beispielsweise ein Vakuumförderband, vorhanden, auf das die Abschnitte 42 abgelegt werden. Das Förderband ist quer zur Längsrichtung der Abschnitte 42 angeordnet, so dass die Abschnitte 42 in die Pfeilrichtung wegtransportiert werden. Weiterhin ist eine Binderauftragseinrichtung 50 vorgesehen, die auf die abgelegten Abschnitte 42 Bindermaterial aufträgt, so dass die Abschnitte etwas miteinander verbunden und in ihrer Lage fixiert werden.

### Bezugszeichenliste

- 1, 21, 41: Fasermaterial
- 2, 22, 42: Abschnitt
- 3, 13, 23, 43: Gegenwalze
- 4, 14, 24, 44: Trennwalze
- 5, 15, 25 ,35, 45: Abschnittträger
- 6, 16, 26, 46: Messer
- 7, 17, 27, 47: Halteelement
- 8, 18, 28: Walzenumfang

- 29: Vertiefung
- 31: Laufrolle
- 32: Federelement
- 33: Vakuumanschluss
- 34: Binderauftragseinrichtung
- 36: Kulissenführung
- 37: Vakuumstutzen
- 38: Stufensprung der Anschlagkante
- 39: Anschlagkante
- 40: Anpresswalze
- 48: Rotationsachse Gegenwalze
- 49: Rotationsachse Trennwalze
- 50: Binderauftragseinrichtung

## Patentansprüche

1. Vorrichtung zum Trennen von Fasermaterial (1,21,41), insbesondere von strang- oder bandförmigem Fasermaterial, in Abschnitte (2,22,42) und zum Ablegen der Abschnitte (2,22,42), aufweisend eine Trennwalze (4,14,24,44) mit mehreren am Walzenumfang der Trennwalze (4,14,24,44) angeordneten Messern (6,16,26,46), eine Gegenwalze (3,13,23,43) und einen Abschnittträger (5,15,25,35,45), wobei die Trennwalze (4,14,24,44) und die Gegenwalze (3,13,23,43) gegenläufig rotierbar sind und so angeordnet sind, dass das Fasermaterial (1,21,41) zwischen Trennwalze (4,14,24,44) und Gegenwalze (3,13,23,43) hindurchgeführt und dabei von einem der Messer (6,16,26,46) im Zusammenwirken mit der Gegenwalze (3,13,23,43) durchtrennt werden kann, so dass dadurch ein Abschnitt (2,22,42) entsteht, wobei an der Gegenwalze (3,13,23,43) oder an der Trennwalze (4,14,24,44) mehrere integrierte Halteelemente (7,17,27,47) vorhanden sind, so ausgebildet, dass jeweils zumindest eines der Halteelemente (7,17,27,47) eine Haltekraft auf einen jeweiligen Abschnitt (2,22,42) ausüben kann, wodurch der Abschnitt (2,22,42) an der Walze mit den Halteelementen (3,13,23,43,4,14,24,44) gehalten und nach dem Durchtrennen ein Stück mit dem Walzenumfang dieser Walze (3,13,23,43,4,14,24,44) mitbewegt werden kann,
**dadurch gekennzeichnet,**
**dass** die Halteelemente (7,17,27,47) so ausgebildet sind, dass der jeweilige Abschnitt (2,22,42) nach dieser Mitbewegung auf den Abschnittträger (5,25,35,45) abgelegt werden kann, indem die Halteelemente (7,17,27,47) im Wesentlichen radial verschiebbar ausgeführt sind, derart dass sie zum Ablegen den jeweiligen Abschnitt (2,22,42) vom Walzenumfang (8,18,28) weg bewegen können.

2. Vorrichtung nach Anspruch 1
**dadurch gekennzeichnet,**
**dass** die Halteelemente (7,17,27,47) als Vakuumhalteelemente mit zumindest einem Vakuumanschluss (33) ausgebildet sind, die mit einer Vakuumversorgung verbindbar ist, die in dem Umfangsbereich, in dem der Abschnitt abgelegt wird, abschaltbar oder unterbrechbar ist.

3. Vorrichtung nach Anspruch 2
**dadurch gekennzeichnet,**
**dass** die Vakuumversorgung über einen stehenden Vakuumstutzen (37), welcher mit einer Unterdruckquelle verbunden ist, erfolgt, und der so ausgebildet ist, dass er im Umfangsbereich, in dem der Abschnitt (2,22,42) gehalten werden soll, die Vakuumanschlüsse (33) der entsprechenden Halteelemente (7,17,27,47) mit der Vakuumversorgung verbindet und in dem Umfangsbereich, in dem der Abschnitt (2,22,42) abgelegt wird, die Vakuumanschlüsse (33) freigibt.

4. Vorrichtung nach Anspruch 1
**dadurch gekennzeichnet,**
**dass** die Halteelemente (7,17,27,47) als elektrostatische Halteelemente oder als mechanische Halteelemente ausgeführt sind.

5. Vorrichtung nach einem der vorherigen Ansprüche
**dadurch gekennzeichnet,**
**dass** die im Wesentlichen radiale Bewegung der Halteelemente (7,17,27,47) während der Rotation der Walzen über eine Kulissenführung (36) gesteuert wird, insbesondere derart, dass die Kulissenführung (36) einen Stufensprung (38) im Wesentlichen radial nach außen aufweist in dem Umfangsbereich, in dem der Abschnitt abgelegt (2,22,42) wird.

6. Vorrichtung nach einem der vorherigen Ansprüche
**dadurch gekennzeichnet,**
**dass** eines oder mehrere Federelemente (32) vorgesehen sind, die die Halteelemente (7,17,27,47) im Wesentlichen radial nach außen bis an eine Anschlagkante (39) drücken.

7. Vorrichtung nach einem der vorherigen Ansprüche
**dadurch gekennzeichnet,**
**dass** der Winkel entlang des Walzenumfanges (8,18,28) zwischen der Stelle, an der das Messer das Fasermaterial (1,21,41) durchtrennt, bis zu der Stelle an der der Abschnitt (2,22,42) abgelegt wird, zwischen 20° und 180° beträgt, bevorzugt zwischen 45° und 135°.

8. Vorrichtung nach einem der vorherigen Ansprüche
**dadurch gekennzeichnet,**
**dass** der geringste Abstand (d) zwischen Halteelement (7,17,27,47) und Abschnittträger (5,25,35,45) beim Ablegen zwischen 0 und 70 mm, bevorzugt zwischen 0 und 10 mm beträgt.

9. Vorrichtung nach einem der vorherigen Ansprüche
**dadurch gekennzeichnet,**
**dass** der Abschnittträger (5,15,25,35,45) als Vakuumförderband ausgebildet ist, insbesondere so angeordnet, dass dieses die Abschnitte (2,22,42) nach dem Ablegen im Wesentlichen quer zu ihrer Längsrichtung transportieren kann, bevorzugt in einem Winkel zu ihrer Längsrichtung von 60° bis 90°, besonders bevorzugt in einem Winkel zu ihrer Längsrichtung von 80° bis 90°.

10. Verfahren zum Trennen von Fasermaterial (1,21,41), insbesondere von strang- oder bandförmigem Fasermaterial, in Abschnitte (2,22,42) und zum Ablegen der Abschnitte (2,22,42) unter Verwendung einer Vorrichtung nach einem der vorherigen Ansprüche wobei folgende Schritte nacheinander ausgeführt werden:
a) Trennen eines Abschnittes (2,22,42) vom Fasermaterial (1,21,41)
b) Halten des Abschnittes (2,22,42) an der Gegenwalze (3,13,23,43) oder an der Trennwalze (4,14,24,44) und Mitbewegen des Abschnittes (2,22,42) mit dem Walzenumfang (8,18,28) dieser Walze (3,13,23,43,4,14,24,44)
c) Ablegen des Abschnittes (2,22,42) auf einem Abschnittsträger (5,15,25,35,45)

11. Verfahren nach Anspruch 10
**dadurch gekennzeichnet,**
**dass** der Abschnitt (2,22,42) von der Stelle, an der er vom Fasermaterial (1,21,41) getrennt wird, bis zu der Stelle, an der er abgelegt wird, über einen Winkel zwischen 20° und 180°, bevorzugt zwischen 45° und 135° mit dem Walzenumfang (8,18,28) mitbewegt wird.

12. Verfahren nach Anspruch 10 oder 11
**dadurch gekennzeichnet,**
**dass** zwischen Schritt b) und c) ein Impuls in radialer Richtung nach außen auf den Abschnitt (2,22,42) ausgeübt wird, so dass der Abschnitt (2,22,42) sich vom Halteelement (7,17,27,47) löst.

13. Verfahren nach einem der Ansprüche 10 bis 12
**dadurch gekennzeichnet,**
**dass** eine Binderauftragseinrichtung (34) vorhanden ist, die Bindermaterial auf eines oder mehrere Halteelemente (7,17,27,47) aufträgt, bevor diese mit dem Abschnitt (2,22,42) in Kontakt kommen und dadurch eine Haltekraft auf den Abschnitt (2,22,42) ausgeübt wird.

14. Verfahren nach einem der Ansprüche 10 bis 13
**dadurch gekennzeichnet,**
**dass** eine Binderauftragseinrichtung (50) vorhanden ist, die Bindermaterial auf die Abschnitte (2,22,42) nach dem Ablegen auf dem Abschnittträger (5,15,25,35,45) aufträgt, und somit die abgelegten Abschnitte (2,22,42) miteinander verbunden werden können.

15. Verfahren nach einem der Ansprüche 10 bis 14
**dadurch gekennzeichnet,**
**dass** die Abschnitte (2,22,42) nach dem Ablegen auf dem Abschnittsträger (5,15,25,35,45) im Wesentlichen senkrecht zu ihrer Faserrichtung weg transportiert werden, bevorzugt in einem Winkel zu ihrer Faserrichtung von 60° bis 90°, besonders bevorzugt in einem Winkel zu ihrer Faserrichtung von 80° bis 90°.

## Claims

1. Device for separating fibrous material (1, 21, 41), in particular strand-shaped or tape-shaped fibrous material, into portions (2, 22, 42), and for depositing the portions (2, 22, 42), having a separation roller (4, 14, 24, 44) having a plurality of cutters (6, 16, 26, 46) which are disposed on the roller circumference of the separation roller (4, 14, 24, 44), a counter roller (3, 13, 23, 43), and a portion carrier (5, 15, 25, 35, 45), wherein the separation roller (4, 14, 24, 44) and the counter roller (3, 13, 23, 43) are rotatable in opposite directions and are disposed such that the fibrous material (1, 21, 41) is guided through between the separation roller (4, 14, 24, 44) and the counter roller (3, 13, 23, 43) and thereby may be severed by one of the cutters (6, 16, 26, 46) interacting with the counter roller (3, 13, 23, 43) such that, on account thereof, a portion (2, 22, 42) is created, wherein a plurality of integrated retaining elements (7, 17, 27, 47) which are configured such that in each case at least one of the retaining elements (7, 17, 27, 47) may exert a retaining force on a respective portion (2, 22, 42) are present on the counter roller (3, 13, 23, 43) or on the separation roller (4, 14, 24, 44), on account of which the portion (2, 22, 42) may be retained on the roller having the retaining elements (3, 13, 23, 43, 4, 14, 24, 44) and, after severing, may be moved by a distance conjointly with the roller circumference of this roller (3, 13, 23, 43, 4, 14, 24, 44),
**characterized in**
**that** the retaining elements (7, 17, 27, 47) are configured such that the respective portion (2, 22, 42) after this conjoint movement may be deposited onto the portion carrier (5, 25, 35, 45) in that the retaining elements (7, 17, 27, 47) are embodied so as to be displaceable in a substantially radial manner such that said retaining elements (7, 17, 27, 47) may move the respective portion (2, 22, 42) away from the roller circumference (8, 18, 28) for depositing.

2. Device according to Claim 1,
**characterized in**
**that** the retaining elements (7, 17, 27, 47) are configured as vacuum retaining elements having at least one vacuum connector (33) which is connectible to a vacuum supply which in that circumferential region in which the portion is deposited is deactivatable or interruptible.

3. Device according to Claim 2,
**characterized in**
**that** the vacuum supply is performed by way of a stationary vacuum port (37) which is connected to a negative-pressure source and which is configured such that said vacuum port (37) in that circumferential region in which the portion (2, 22, 42) is to be held connects the vacuum connectors (33) of the respective retaining elements (7, 17, 27, 47) to the vacuum supply, and in that circumferential region in which the portion (2, 22, 42) is deposited vacates the vacuum connectors (33).

4. Device according to Claim 1,
**characterized in**
**that** the retaining elements (7, 17, 27, 47) are embodied as electrostatic retaining elements or as mechanical retaining elements.

5. Device according to one of the preceding claims,
**characterized in**
**that** the substantially radial movement of the retaining elements (7, 17, 27, 47) during rotation of the rollers is controlled by way of a gate-type guide (36), in particular in such a manner that the gate-type guide (36) in that circumferential region in which the portion (2, 22, 42) is deposited has a substantially radially outward increment (38).

6. Device according to one of the preceding claims,
**characterized in**
**that** one or a plurality of sprung elements (32) which urge the retaining elements (7, 17, 27, 47) in a substantially radial manner outward up to a stop edge (39) is/are provided.

7. Device according to one of the preceding claims,
**characterized in**
**that** the angle along the roller circumference (8, 18, 28) between that point at which the cutter severs the fibrous material (1, 21, 41) up to that point at which the portion (2, 22, 42) is deposited is between 20° and 180°, preferably between 45° and 135°.

8. Device according to one of the preceding claims,
**characterized in**
**that** the minimum spacing (d) between the retaining element (7, 17, 27, 47) and the portion carrier (5, 25, 35, 45) when depositing is between 0 and 70 mm, preferably between 0 and 10 mm.

9. Device according to one of the preceding claims,
**characterized in**
**that** the portion carrier (5, 15, 25, 35, 45) is configured as a vacuum conveyor belt, in particular disposed such that the latter may transport the portions (2, 22, 42) after depositing in a manner substantially transverse to the longitudinal direction of said portions, preferably at an angle in relation to the longitudinal direction thereof of 60° to 90°, particularly preferably at an angle in relation to the longitudinal direction thereof of 80° to 90°.

10. Method for separating fibrous material (1, 21, 41), in particular strand-shaped or tape-shaped fibrous material, into portions (2, 22, 42), and for depositing the portions (2, 22, 42) while using a device according to one of the preceding claims, wherein the following steps are sequentially carried out:
a) separating a portion (2, 22, 42) from the fibrous material (1, 21, 41);
b) retaining the portion (2, 22, 42) on the counter roller (3, 13, 23, 43) or on the separation roller (4, 14, 24, 44), and moving this portion (2, 22, 42) conjointly with the roller circumference (8, 18, 28) of this roller (3, 13, 23, 43, 4, 14, 24, 44);
depositing the portion (2, 22, 42) on a portion carrier (5, 15, 25, 35, 45).

11. Method according to Claim 10,
**characterized in**
**that** the portion (2, 22, 42), from that point at which said portion (2, 22, 42) is separated from the fibrous material (1, 21, 41) up to that point at which said portion (2, 22, 42) is deposited, is moved conjointly with the roller circumference (8, 18, 28) across an angle between 20° and 180°, preferably between 45° and 135°.

12. Method according to Claim 10 or 11, **characterized in**
**that** between steps b) and c) an impulse in the outward radial direction is exerted on the portion (2, 22, 42) such that the portion (2, 22, 42) is released from the retaining element (7, 17, 27, 47) .

13. Method according to one of Claims 10 to 12,
**characterized in**
**that** a binder application installation (34) which applies binder material onto one or a plurality of retaining elements (7, 17, 27, 47) before the latter come into contact with the portion (2, 22, 42), a retaining force being exerted on account thereof on the portion (2, 22, 42), is present.

14. Method according to one of Claims 10 to 13,
**characterized in**
**that** a binder application installation (50) which applies binder material onto the portions (2, 22, 42) after the latter have been deposited onto the portion carrier (5, 15, 25, 35, 45), the deposited portions (2, 22, 42) thus being able to be interconnected, is present.

15. Method according to one of Claims 10 to 14,
**characterized in**
**that** the portions (2, 22, 42) after the latter have been deposited onto the portion carrier (5, 15, 25, 35, 45) are transported away in a manner substantially perpendicular to the fiber direction of said portions (2, 22, 42), preferably at an angle in relation to the fiber direction thereof of 60° to 90°, particularly preferably at an angle in relation to the fiber direction thereof of 80° to 90°.

## Revendications

1. Dispositif de découpage d'une matière fibreuse (1, 21, 41), en particulier d'une matière fibreuse en forme de cordon ou de bande, en segments (2, 22, 42) et de dépôt des segments (2, 22, 42), présentant un cylindre de découpage (4, 14, 24, 44) muni de plusieurs couteaux (6, 16, 26, 46) disposés à la périphérie de cylindre du cylindre de découpage (4, 14, 24, 44), un contre-cylindre (3, 13, 23, 43) et un support de segments (5, 15, 25, 35, 45), dans lequel le cylindre de découpage (4, 14, 24, 44) et le contre-cylindre (3, 13, 23, 43) peuvent tourner en sens contraire et sont disposés de telle manière que la matière fibreuse (1, 21, 41) puisse être conduite entre le cylindre de découpage (4, 14, 24, 44) et le contre-cylindre (3, 13, 23, 43) et être découpée par un des couteaux (6, 16, 26, 46) en coopération avec le contre-cylindre (3, 13, 23, 43), de telle manière qu'il se forme ainsi un segment (2, 22, 42), dans lequel il se trouve sur le contre-cylindre (3, 13, 23, 43) ou sur le cylindre de découpage (4, 14, 24, 44) plusieurs éléments de maintien intégrés (7, 17, 27, 47), configurés de telle manière que chaque fois au moins un des éléments de maintien (7, 17, 27, 47) puisse exercer une force de maintien sur un segment respectif (2, 22, 42), le segment (2, 22, 42) pouvant ainsi être maintenu sur le cylindre avec les éléments de maintien (3, 13, 23, 43, 4, 14, 24, 44) et une pièce pouvant, après le découpage, être entraînée avec la périphérie de cylindre de ce cylindre (3, 13, 23, 43, 4, 14, 24, 44),
**caractérisé en ce que** les éléments de maintien (7, 17, 27, 47) sont configurés de telle manière que le segment respectif (2, 22, 42) puisse après cet entraînement être déposé sur le support de segments (5, 25, 35, 45), par le fait que les éléments de maintien (7, 17, 27, 47) sont déplaçables essentiellement radialement, de telle manière qu'ils puissent être déplacés à l'écart de la périphérie de cylindre (8, 18, 28) pour le dépôt du segment respectif (2, 22, 42).

2. Dispositif selon la revendication 1, **caractérisé en ce que** les éléments de maintien (7, 17, 27, 47) sont réalisés sous la forme d'éléments de maintien sous vide avec au moins un raccord de vide (33), qui peut être raccordé à une alimentation de vide, qui peut être déconnectée ou interrompue dans la région de la périphérie, dans laquelle le segment est déposé.

3. Dispositif selon la revendication 2, **caractérisé en ce que** l'alimentation de vide est effectuée au moyen d'un tuyau sous vide dressé (37), qui est relié à une source de dépression, et qui est réalisé de telle manière que, dans la région de la périphérie dans laquelle le segment (2, 22, 42) doit être maintenu, il relie les raccords de vide (33) des éléments de maintien correspondants (7, 17, 27, 47) à l'alimentation de vide et que, dans la région de la périphérie dans laquelle le segment (2, 22, 42) est déposé, il libère les raccords de vide (33).

4. Dispositif selon la revendication 1, **caractérisé en ce que** les éléments de maintien (7, 17, 27, 47) sont constitués par des éléments de maintien électrostatiques ou par des éléments de maintien mécaniques.

5. Dispositif selon l'une quelconque des revendications précédentes, **caractérisé en ce que** le déplacement essentiellement radial des éléments de maintien (7, 17, 27, 47) pendant la rotation des cylindres est commandé au moyen d'un guidage à coulisse (36), en particulier de telle manière que le guidage à coulisse (36) présente un saut étagé (38) essentiellement radial vers l'extérieur dans la région de la périphérie, dans laquelle le segment (2, 22, 42) est déposé.

6. Dispositif selon l'une quelconque des revendications précédentes, **caractérisé en ce qu'**il est prévu un ou plusieurs élément (s) de ressort (32), qui pousse (nt) les éléments de maintien (7, 17, 27, 47) essentiellement radialement vers l'extérieur jusqu'à une arête de butée (39).

7. Dispositif selon l'une quelconque des revendications précédentes, **caractérisé en ce que** l'angle le long de la périphérie de cylindre (8, 18, 28) entre l'endroit auquel le couteau découpe la matière fibreuse (1, 21, 41) et l'endroit auquel le segment (2, 22, 42) est déposé, vaut entre 20° et 180°, de préférence entre 45° et 135°.

8. Dispositif selon l'une quelconque des revendications précédentes, **caractérisé en ce que** la plus petite distance (d) entre un élément de maintien (7, 17, 27, 47) et le support de segments (5, 25, 35, 45) lors du dépôt vaut entre 0 et 70 mm, de préférence entre 0 et 10 mm.

9. Dispositif selon l'une quelconque des revendications précédentes, **caractérisé en ce que** le support de segments (5, 15, 25, 35, 45) est constitué par une bande transporteuse sous vide, en particulier disposée de telle manière qu'elle puisse transporter les segments (2, 22, 42) après le dépôt essentiellement transversalement à leur direction longitudinale, de préférence sous un angle par rapport à leur direction longitudinale de 60° à 90°, en particulier de préférence sous un angle de 80° à 90° par rapport à leur direction longitudinale.

10. Procédé de découpage d'une matière fibreuse (1, 21, 41), en particulier d'une matière fibreuse en forme de cordon ou de bande, en segments (2, 22, 42) et pour le dépôt des segments (2, 22, 42) en utilisant un dispositif selon l'une quelconque des revendications précédentes, dans lequel on exécute l'une après l'autre les opérations suivantes:
a) découpage d'un segment (2, 22, 42) de la matière fibreuse (1, 21, 41),
b) maintien du segment (2, 22, 42) sur le contre-cylindre (3, 13, 23, 43) ou sur le cylindre de découpage (4, 14, 24, 44) et entraînement du segment (2, 22, 42) avec la périphérie de cylindre (8, 18, 28) de ce cylindre (3, 13, 23, 43, 4, 14, 24, 44),
c) dépôt du segment (2, 22, 42) sur un support de segments (5, 15, 25, 35, 45).

11. Procédé selon la revendication 10, **caractérisé en ce que** l'on entraîne le segment (2, 22, 42) avec la périphérie de cylindre (8, 18, 28) sur un angle compris entre 20° et 180°, de préférence entre 45° et 135°, depuis l'endroit auquel on le découpe de la matière fibreuse (2, 21, 41) jusqu'à l'endroit auquel on le dépose.

12. Procédé selon la revendication 10 ou 11, **caractérisé en ce que** l'on exerce sur le segment (2, 22, 42) entre les étapes b) et c) une impulsion en direction radiale vers l'extérieur, de telle manière que le segment (2, 22, 42) se décolle de l'élément de maintien (7, 17, 27, 47).

13. Procédé selon l'une quelconque des revendications 10 à 12, **caractérisé en ce qu'**il se trouve un dispositif d'application de liant (34), qui dépose une matière liante sur un ou plusieurs des éléments de maintien (7, 17, 27, 47), avant que ceux-ci viennent en contact avec le segment (2, 22, 42), et on exerce ainsi une force de maintien sur le segment (2, 22, 42).

14. Procédé selon l'une quelconque des revendications 10 à 13, **caractérisé en ce qu'**il se trouve un dispositif d'application de liant (50), qui dépose une matière liante sur les segments (2, 22, 42) après le dépôt sur le support de segments (5, 15, 25, 35, 45), et les segments déposés (2, 22, 42) peuvent ainsi être assemblés l'un à l'autre.

15. Procédé selon l'une quelconque des revendications 10 à 14, **caractérisé en ce que** l'on emporte les segments (2, 22, 42) après le dépôt sur le support de segments (5, 15, 25, 35, 45) essentiellement perpendiculairement à leur direction des fibres, de préférence sous un angle par rapport à leur direction des fibres de 60° à 90°, en particulier de préférence sous un angle de 80° à 90° par rapport à leur direction des fibres.
